# EUROPEAN PATENT APPLICATION

(11) **EP 2 744 284 A1**
(43) Date of publication of application: **18.06.2014**
(21) Application number: 12821399.8
(22) Date of filing: 25.07.2012
(51) Int. Cl.: H04W 72/04

(54) **RESOURCE ALLOCATION METHOD AND DEVICE, AND RESOURCE ACQUISITION METHOD AND DEVICE**

(30) Priority: 11.08.2011 CN 201110230182
(71) Applicant: Huawei Technologies Co., Ltd, Shenzhen, Guangdong 518129 (CN)
(72) Inventor: HE, Chuanfeng, Shenzhen Guangdong 518129 (CN); WANG, Zongjie, Shenzhen Guangdong 518129 (CN)
(74) Representative: Isarpatent
(86) International application number: PCT/CN2012/079149
(87) International publication number: WO 2013/020454

(57) **Abstract**

Embodiments of the present invention disclose a method and apparatus for allocating resource and a method and apparatus for acquiring resource. The method for allocating resource includes: allocating an F-PCICH resource to a UE, where the F-PCICH resource includes F-PCICH configuration information; and sending the F-PCICH configuration information to the UE through first control information, where the first control information is corresponding to an F-PCICH resource index number, and the F-PCICH resource index number is corresponding to the F-PCICH configuration information. This enables the UE to acquire the F-PCICH resource, so that a UL CLTD technology can be applied.

## Description

This application claims priority to Chinese Patent Application No. 201110230182.8, filed with the Chinese Patent Office on August 11, 2011 and entitled "METHOD AND APPARATUS FOR ALLOCATING RESOURCE AND METHOD AND APPARATUS FOR ACQUIRING RESOURCE", which is incorporated herein by reference in its entirety.

### TECHNICAL FIELD

The present invention relates to the field of communications technologies, and in particular, to a method and apparatus for allocating resource and a method and apparatus for acquiring resource.

### BACKGROUND

In the 3GPP (3rd generation partnership project, 3rd Generation Partnership Project), a UL CLTD (uplink Closed-loop transmit diversity, uplink closed-loop transmit diversity) technology is introduced. The UL CLTD technology has uplink performance gains for reducing transmit power of a UE (User Equipment, user equipment) and improving cell capacity, and so on.

Currently, based on various advantages of the UL CLTD technology, it is expected that the UE can apply the UL CLTD technology if the UE is in a CELL-FACH (Cell-Forward Access Channel, cell-forward access channel) state. However, if the UE is in the CELL-FACH state, a common E-DCH (common Enhanced Dedicated Channel, common enhanced dedicated channel) resource is a pre-configured common resource and does not include an F-PCICH (Fractional Precoding Control Indication Channel, fractional precoding control indication channel) resource, but a base station (Node B) needs to feed back the F-PCICH resource to the UE in the UL CLTD technology, so as to implement an uplink closed-loop transmit diversity.

Therefore, currently, an application of the UL CLTD technology cannot be implemented if the UE is in the CELL-FACH state.

### SUMMARY

Embodiments of the present invention provide a method and apparatus for allocating resource and a method and apparatus for acquiring resource, so as to implement F-PCICH resource allocation.

One aspect of the present invention provides a method for allocating resource, including: allocating a fractional precoding control indication channel (F-PCICH) resource to a user equipment (UE), where the F-PCICH resource includes F-PCICH configuration information; and sending the F-PCICH configuration information to the UE through first control information, where the first control information is corresponding to an F-PCICH resource index number, and the F-PCICH resource index number is corresponding to the F-PCICH configuration information.

Another aspect of the present invention provides a resource allocation apparatus, including an allocation unit and a first transmission unit, where:
the allocation unit is configured to allocate an F-PCICH resource to a UE, where the F-PCICH resource includes F-PCICH configuration information; and
the first transmission unit is configured to send the F-PCICH configuration information to the UE through first control information, where the first control information is corresponding to an F-PCICH resource index number, and the F-PCICH resource index number is corresponding to the F-PCICH configuration information.

Another aspect of the present invention provides a method for acquiring resource, including: receiving first control information; and acquiring a corresponding F-PCICH resource index number according to the first control information, and acquiring a corresponding F-PCICH resource according to the F-PCICH resource index number, where the F-PCICH resource includes F-PCICH configuration information.

Another aspect of the present invention provides a resource acquiring apparatus, including a first receiving unit and an acquiring unit, where:
the first receiving unit is configured to receive first control information; and
the acquiring unit is configured to acquire a corresponding F-PCICH resource index number according to the first control information, and acquire a corresponding F-PCICH resource according to the F-PCICH resource index number, where the F-PCICH resource includes F-PCICH configuration information.

It can be seen from the technical solutions provided in the foregoing embodiments of the present invention that, an F-PCICH resource is allocated to a UE, where the F-PCICH resource includes F-PCICH configuration information; and the F-PCICH configuration information is sent to the UE through first control information. This enables the UE to acquire the F-PCICH resource, so that an application of a UL CLTD technology can be implemented.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic flowchart of a method for allocating resource according to an embodiment of the present invention;
FIG. 2 is a first schematic structural diagram of a resource allocation apparatus according to an embodiment of the present invention;
FIG. 3 is a second schematic structural diagram of a resource allocation apparatus according to an embodiment of the present invention;
FIG. 4 is a schematic flowchart of a method for acquiring resource according to an embodiment of the present invention;
FIG. 5 is a first schematic structural diagram of a resource acquiring apparatus according to an embodiment of the present invention;
FIG. 6 is a second schematic structural diagram of a resource acquiring apparatus according to an embodiment of the present invention;
FIG. 7 is a schematic flowchart of a specific application of a method for allocating resource according to an embodiment of the present invention;
FIG. 8 shows a mapping table between second control information and a common E-DCH resource index number in a method for allocating resource according to an embodiment of the present invention;
FIG. 9 shows a first signature table in a method for allocating resource according to an embodiment of the present invention;
FIG. 10 is a schematic diagram of a timeslot of an AICH in a method for allocating resource according to an embodiment of the present invention;
FIG. 11 shows a mapping table between first control information and an F-PCICH resource index number in a method for allocating resource according to an embodiment of the present invention;
FIG. 12 is a schematic flowchart of a specific application of a method for allocating resource according to another embodiment of the present invention; and
FIG. 13 is a schematic flowchart of a specific application of a method for allocating resource according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

The following further describes the embodiments of the present invention in detail with reference to the accompanying drawings.

The following description, which is for description but not for limitation, provides specific details such as a specific system structure, an interface, and a technology, so as to facilitate a thorough understanding of the present invention. However, persons skilled in the art should understand that, the present invention can also be implemented in another embodiment without these specific details. In another case, a detailed description about a well-known apparatus, circuit, and method is omitted to prevent unnecessary details from obscuring the description about the present invention.

Various technologies described in this specification may be applied to various wireless communications systems, for example, current 2G and 3G communications systems and a next-generation communications system, such as a Global System for Mobile communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless), a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

This specification describes various aspects in combination with a terminal, a base station, and/or a base station controller.

The terminal may be a wireless terminal or a wired terminal. The wireless terminal may be a device providing voice and/or data connectivity for a user, a handheld device having a wireless connection function, or another processing device connected to a wireless modem. The wireless terminal may communicate with one or more core networks through a radio access network (for example, RAN, Radio Access Network). The wireless terminal may be a mobile terminal, such as a mobile phone (or called a "cellular" phone) or a computer equipped with a mobile terminal. For example, it may be a portable, pocket, handheld, computer-embedded, or vehicle-mounted mobile apparatus, which exchanges voices and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may be a device that communicates with the wireless terminal through one or more sectors on an air interface on an access network. The base station may be used to perform mutual conversion between a received air frame and an IP packet, acting as a router between the wireless terminal and another part of the access network, where the another part of the access network may include an Internet Protocol (IP) network. The base station may further coordinate attribute management on the air interface. For example, the base station may be a base station (BTS, Base Transceiver Station) in the GSM or CDMA, a base station (NodeB) in the WCDMA, or an evolved base station (NodeB, eNB, or e-NodeB, evolutional Node B) in the LTE, which is not limited in the present invention.

The base station controller may be a base station controller (BSC, base station controller) in the GSM or CDMA, or a radio network controller (RNC, Radio Network Controller) in the WCDMA, which is not limited in the present invention.

In addition, the terms "system" and "network" in this specification may be used interchangeably in this specification. The term "and/or" in this specification describes only an association between associated objects and represents that three relationships may exist. For example, A and/or B may represent the following three cases: Only A exists; both A and B exist; and only B exists. In addition, the symbol "/" in this specification generally represents that the associated objects before and after the symbol are in an "or" relationship.

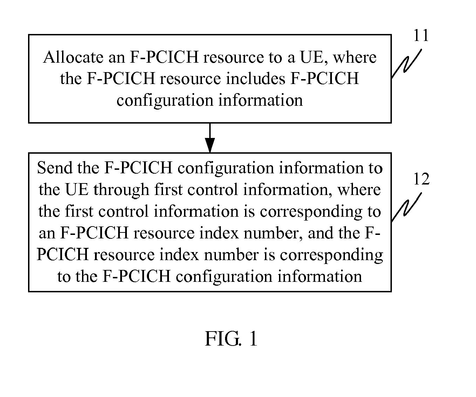

As shown in FIG. 1, an embodiment of the present invention provides a method for allocating resource, which is described as follows:
11. Allocate an F-PCICH (Fractional Precoding Control Indication Channel, fractional precoding control indication channel) resource to a UE (User Equipment, user equipment), where the F-PCICH resource includes F-PCICH configuration information.
12. Send the F-PCICH configuration information to the UE through first control information, where the first control information is corresponding to an F-PCICH resource index number, and the F-PCICH resource index number is corresponding to the F-PCICH configuration information.

The method for allocating resource in the embodiment of the present invention may be executed by a base station, such as a Node B.

In the method for allocating resource in the embodiment of the present invention, the F-PCICH resource may include one or more of the following: a frame offset (frame offset), a slot format (slot format), and a channelization code number (channelization code number). However, the F-PCICH resource is not limited to the frame offset, the slot format, and the channelization code number. The F-PCICH configuration information may include value information of one or more of the following parameters: the frame offset, the slot format, and the channelization code number of the F-PCICH resource.

It can be seen from the technical solution provided in the foregoing embodiment of the present invention that, an F-PCICH resource is allocated to a UE, where the F-PCICH resource includes F-PCICH configuration information; and the F-PCICH configuration information is sent to the UE through first control information. This enables the UE to acquire the F-PCICH resource, so that an application of a UL CLTD technology can be implemented.

The F-PCICH resource includes F-PCICH configuration information of the UE in a CELL-FACH (Cell-Forward Access Channel, cell-forward access channel) state or an IDLE (idle) state.

Optionally, the first control information may occupy an idle chip in an access timeslot sent by an AICH (Acquisition Indicator Channel, acquisition indicator channel), and in step 12, the first control information is borne in the idle chip in the access timeslot sent by the AICH and is sent to the UE.

In addition, persons skilled in the art may know that, the AICH bears control information (hereinafter briefly referred to as second control information) corresponding to common E-DCH (common Enhanced Dedicated Channel, common enhanced dedicated channel) configuration information.

The second control information may include a second signature and a second acquisition indicator corresponding to the second signature, where a combination of the second signature and the second acquisition indicator is corresponding to a common E-DCH resource index number, and the common E-DCH resource index number is corresponding to the common E-DCH configuration information. Therefore, it may also be understood that, the second control information is corresponding to a common E-DCH resource.

The second signature may include multiple sequences formed of real numbers, and the second acquisition indicator may include +1, -1, or 0. Specifically, for the second signature and the second acquisition indicator, reference may be made to a first signature and a first acquisition indicator in the following for understanding, and therefore no further details are provided herein.

The common E-DCH resource may include one or more of the following: a symbol offset (symbol offset), an F-DPCH (fractional dedicated physical channel, Fractional Dedicated Physical Channel) channel code number, an E-HICH (E-DCH hybrid ARQ indicator channel, E-DCH Hybrid ARQ Indicator Channel), an E-RGCH (E-DCH relative grant channel, E-DCH Relative Grant Channel), a scrambling code type, and a scrambling code number, but is not limited thereto. The common E-DCH configuration information may include value information of one or more of the following parameters: the symbol offset, the F-DPCH channel code number, the E-HICH, the E-RGCH, the scrambling code type, and the scrambling code number.

It can be seen that, the first control information may be borne in the idle chip in the access timeslot sent by the AICH and be sent to the UE, so that the AICH is capable of bearing the first control information corresponding to the F-PCICH configuration information and the second control information corresponding to the common E-DCH configuration information, and it is not necessary to extend the AICH. This can be conveniently implemented.

Specifically, the first control information is corresponding to the F-PCICH resource index number, and the F-PCICH resource index number is corresponding to the F-PCICH configuration information. Therefore, it may also be understood that, the first control information is corresponding to the F-PCICH resource.

The first control information may include the first signature and the first acquisition indicator corresponding to the first signature, where a combination of the first signature and the first acquisition indicator is corresponding to the F-PCICH resource index number.

The first signature may include multiple sequences formed of real numbers, such as 11111111. The first acquisition indicator corresponding to the first signature may include +1, -1, or 0.

Exemplarily, the first signature may be multiple signature sequences that are mutually orthogonal and generated by using a Hadamard (Hadamard) matrix.

Exemplarily, if the first signature is 11111111 and the first acquisition indicator is -1, the first control information is -1-1-1-1-1-1-1-1, and if the first acquisition indicator is +1, the first control information is 11111111. If the first acquisition indicator is 0, the first control information is 0. That is to say, the base station does not allocate the F-PCICH resource to the UE.

Optionally, before step 11, the method for allocating resource in the embodiment of the present invention may further include:
sending mapping relationship between the F-PCICH configuration information and the F-PCICH resource index number to the UE.

Optionally, the base station and the UE may pre-negotiate mapping relationship between the first control information and the F-PCICH resource index number, and configure the mapping relationship between the first control information and the F-PCICH resource index number. Alternatively, the base station may send the mapping relationship between the first control information and the F-PCICH resource index number to the UE.

It can be seen that, mapping relationship exists between the first control information, the F-PCICH resource index number, and the F-PCICH configuration information.

Similarly and optionally, before step 11, the method for allocating resource in the embodiment of the present invention may further include:
sending mapping relationship between the common E-DCH configuration information and the common E-DCH resource index number to the UE.

Optionally, the base station and the UE may pre-negotiate mapping relationship between the second control information and the common E-DCH resource index number, and configure the mapping relationship between the second control information and the common E-DCH resource index number. Alternatively, the base station may send the mapping relationship between the second control information and the common E-DCH resource index number to the UE.

Persons skilled in the art may know that, mapping relationship exists between the second control information, the common E-DCH resource index number, and the common E-DCH configuration information.

Optionally, regardless of the CELL-FACH state or the IDLE state, a manner of allocating the F-PCICH resource to the UE in step 11 may be manner 1, manner 2, manner 3, or manner 4.

Specifically, manner 1 may include:
receiving an access preamble (preamble) sent from the UE;
allocating the common E-DCH resource to the UE;
receiving a UL CLTD (uplink Closed-loop transmit diversity, uplink closed-loop transmit diversity) capability indication or a UL CLTD request indication that is sent from the UE; and
allocating the F-PCICH resource to the UE if it is determined, according to the UL CLTD capability indication, that the UE has a UL CLTD capability, or it is determined, according to the UL CLTD request indication, that the UE requests use of a UL CLTD.

The preamble sent from the UE includes a signature (signature). The Signature is an attribute of the preamble sent from the UE. If signatures of two preambles are different, it represents that the two preambles are different. A function is used for the base station to detect an access request of the UE.

After the common E-DCH resource is allocated to the UE, the second control information corresponding to the common E-DCH configuration information included in the common E-DCH resource may be borne on the AICH and be sent to the UE.

In a collision detection phase, the UE may send the UL CLTD capability indication or the UL CLTD request indication to the base station. For example, in the collision detection phase, an unused reserved bit in a MAC-i PDU header (Medium Access Control-i Protocol Data Unit header, Medium Access Control-i Protocol Data Unit header) is used to bear the UL CLTD capability indication or the UL CLTD request indication. The unused reserved bit may be 1 bit, and the reserved bit may be used for the UL CLTD capability indication. For example, if the reserved bit is 0, the UE has the UL CLTD capability, and if the reserved bit is 1, the UE does not have the UL CLTD capability. This is not limited in the embodiment of the present invention. Alternatively, the reserved bit may be used for the UL CLTD request indication. For example, if the reserved bit is 0, the UE requests the use of the UL CLTD, and if the reserved bit is 1, the UE does not request the use of the UL CLTD. This is not limited in the embodiment of the present invention.

The collision detection phase is briefly described here: Because in a random access process, the base station determines an access request and allocates the common E-DCH resource only by detecting a preamble signature, and cannot accurately know how many UEs request the resource. However, in the collision detection phase, the base station uniquely determines, by detecting an E-RNTI (E-DCH Radio Network Temporary Identifier, E-DCH radio network temporary identifier) carried by the UE, a UE obtaining the common E-DCH resource, thereby avoiding a collision generated if multiple UEs obtain the common E-DCH resource at the same time.

An F-PCICH resource pool may be preset, and an F-PCICH resource from the F-PCICH resource pool is dynamically allocated to the UE.

A manner of sending the F-PCICH configuration information to the UE through the first control information in step 12 may include:
bearing the first control information corresponding to the F-PCICH configuration information in the idle chip in the access timeslot sent by the AICH and sending the first control information to the UE, and bearing the second control information corresponding to the common E-DCH configuration information on the AICH and sending the second control information to the UE.

It can be seen that, the first control information corresponding to the F-PCICH configuration information and the second control information corresponding to the common E-DCH configuration information are sent together to the UE in the access timeslot sent by the AICH; because the second control information is corresponding to the common E-DCH configuration information obtained by the UE, it is convenient for the UE to determine, according to the second control information sent again, that an AICH received after the collision detection is sent to the UE itself.

In addition, the first control information may be borne in the idle chip in the access timeslot sent by the AICH and be sent to the UE, so that the access timeslot sent by the AICH is capable of bearing both the first control information corresponding to the F-PCICH configuration information and the second control information corresponding to the common E-DCH configuration information, and it is not necessary to extend the AICH. This can be conveniently implemented.

In conclusion, in manner 1, the common E-DCH resource is allocated to the UE first, and the base station dynamically allocates an F-PCICH resource from the F-PCICH resource pool to the UE only if confirming that the UE obtaining the common E-DCH resource has the UL CLTD capability or requests the use of the UL CLTD. This not only implements that the UE in the CELL-FACH state or the IDLE state applies a UL CLTD technology, but also avoids a waste of F-PCICH resources.

Specifically, manner 2 may include:
receiving an access preamble sent from the UE; and
determining a signature of the access preamble, and if the signature belongs to a first signature set, allocating the common E-DCH resource to the UE and allocating the F-PCICH resource to the UE, where a signature in the first signature set is used to be selected by a UE that has a UL CLTD capability or requests use of a UL CLTD so as to send the access preamble.

The method for allocating resource in the embodiment of the present invention may further include:
sending the first signature set to the UE.

It can be seen that, the UE that has the UL CLTD capability or requests the use of the UL CLTD may select a signature from the first signature set and send the access preamble.

The first signature set may include one or more signatures.

A manner of sending the F-PCICH configuration information to the UE through the first control information in step 12 may include:
sending, in the access timeslot sent by the AICH, the first control information corresponding to the F-PCICH configuration information and the second control information corresponding to the common E-DCH configuration information to the UE through the AICH and the idle chip.

In conclusion, in manner 2, the base station reserves a signature set for the UE that has the UL CLTD capability or requests the use of the UL CLTD to select and initiate access, and dynamically allocates an F-PCICH resource from the F-PCICH resource pool to the UE.

In addition, the access timeslot sent by the AICH is capable of bearing both the first control information corresponding to the F-PCICH configuration information and the second control information corresponding to the common E-DCH configuration information, and it is not necessary to extend the AICH. This can be conveniently implemented.

Specifically, manner 3 may include:
receiving an access preamble sent from the UE; and
determining a scrambling code of the access preamble, and if the scrambling code belongs to a first scrambling code set, allocating the common enhanced dedicated channel (E-DCH) resource to the UE and allocating the F-PCICH resource to the UE, where a scrambling code in the first scrambling code set is used to be selected by a UE that has a UL CLTD capability or requests use of a UL CLTD so as to send the access preamble.

It can be known that, the preamble sent from the UE includes a scrambling code, and the scrambling code is an attribute of the preamble sent from the UE.

The method for allocating resource in the embodiment of the present invention may further include:
sending the first scrambling code set to the UE.

The first scrambling code set may include one or more scrambling codes.

It can be seen that, the UE that has the UL CLTD capability or requests the use of the UL CLTD may select a scrambling code from the first scrambling code set and send the access preamble.

In conclusion, in manner 3, the base station reserves a scrambling code set for the UE that has the UL CLTD capability or requests the use of the UL CLTD to select and initiate access, and dynamically allocates an F-PCICH resource from the F-PCICH resource pool to the UE.

In addition, the access timeslot sent by the AICH is capable of bearing both the first control information corresponding to the F-PCICH configuration information and the second control information corresponding to the common E-DCH configuration information, and it is not necessary to extend the AICH. This can be conveniently implemented.

Optionally, manner 2 and manner 3 may further be combined as follows:
receiving an access preamble sent from the UE; and
determining a signature and a scrambling code of the access preamble, and if the signature belongs to a first signature set and the scrambling code belongs to a first scrambling code set, allocating the common E-DCH resource to the UE and allocating the F-PCICH resource to the UE, where a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

Specifically, manner 4 may include:
receiving an access preamble sent from the UE;
allocating the common E-DCH resource to the UE and allocating the F-PCICH resource to the UE;
receiving a UL CLTD capability indication or a UL CLTD request indication that is sent from the UE; and
if it is determined, according to the UL CLTD capability indication, that the UE does not have a UL CLTD capability, or it is determined, according to the UL CLTD request indication, that the UE does not request use of a UL CLTD, withdrawing the F-PCICH resource allocated to the UE.

It may be understood that, the F-PCICH resource allocated to the UE is retained if it is determined, according to the UL CLTD capability indication, that the UE has the UL CLTD capability, or it is determined, according to the UL CLTD request indication, that the UE requests the use of the UL CLTD.

In the collision detection phase, the UE may send the UL CLTD capability indication or the UL CLTD request indication to the base station. For details, reference may be made to same content in the foregoing manner 1 for understanding, and therefore no further details are provided herein.

A manner of sending the F-PCICH configuration information to the UE through the first control information in step 12 may include:
sending, in the access timeslot sent by the AICH, the first control information corresponding to the F-PCICH configuration information and the second control information corresponding to the common E-DCH configuration information to the UE through the AICH and the idle chip.

In conclusion, in manner 4, the base station pre-allocates the common E-DCH resource and the F-PCICH resource to the UE first; and after the UE starts uplink transmission, in the collision detection phase, if determining that the UE does not have the UL CLTD capability or does not request the use of the UL CLTD, the base station withdraws the F-PCICH resource pre-allocated to the UE, and if determining that the UE has the UL CLTD capability or requests the use of the UL CLTD, the base station retains the F-PCICH resource pre-allocated to the UE.

In addition, the access timeslot sent by the AICH is capable of bearing both the first control information corresponding to the F-PCICH configuration information and the second control information corresponding to the common E-DCH configuration information, and it is not necessary to extend the AICH. This can be conveniently implemented.

Within the technical scope disclosed in the embodiment of the present invention, persons skilled in the art may apply the method for allocating resource in the embodiment of the present invention to UL CLTD and MIMO (Multiple-Input Multiple-Out-put, Multiple-Input Multiple-Output) transmit diversity technologies on CDMA (Code Division Multiple Access, Code Division Multiple Access) and WCDMA (Wideband Code Division Multiple Access, Wideband Code Division Multiple Access).

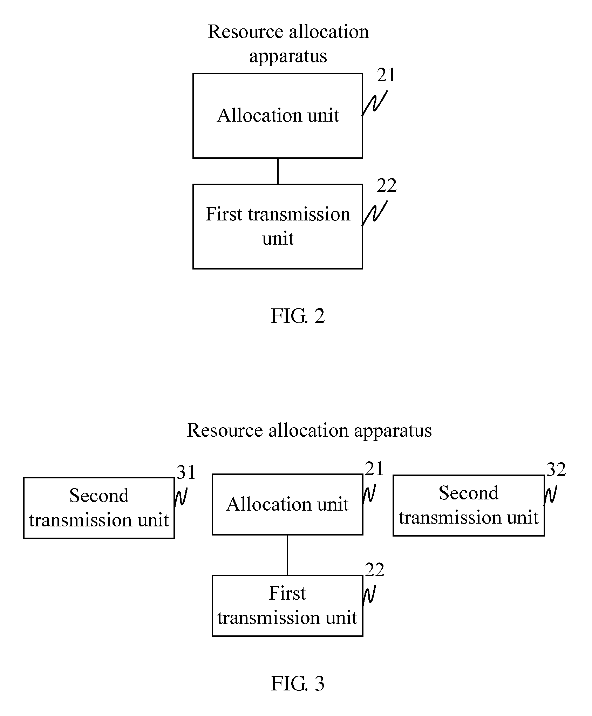

As shown in FIG. 2, an embodiment of the present invention provides a resource allocation apparatus corresponding to the method for allocating resource in the foregoing embodiment, where the apparatus includes an allocation unit 21 and a first transmission unit 22.

The allocation unit 21 is configured to allocate an F-PCICH resource to a UE, where the F-PCICH resource includes F-PCICH configuration information.

The first transmission unit 22 is configured to send the F-PCICH configuration information to the UE through first control information, where the first control information is corresponding to an F-PCICH resource index number, and the F-PCICH resource index number is corresponding to the F-PCICH configuration information.

The resource allocation apparatus in the embodiment of the present invention may be independently arranged, may also be a base station itself, or be arranged together with a base station. The base station is, for example, a Node B.

It can be seen from the technical solution provided in the foregoing embodiment of the present invention that, an F-PCICH resource is allocated to a UE, where the F-PCICH resource includes F-PCICH configuration information; and the F-PCICH configuration information is sent to the UE through first control information. This enables the UE to acquire the F-PCICH resource, so that an application of a UL CLTD technology can be implemented.

Optionally, the F-PCICH resource includes F-PCICH configuration information of the UE in a CELL-FACH state or an IDLE state.

Optionally, the first control information may occupy an idle chip in an access timeslot sent by an acquisition indicator channel (AICH), and the first transmission unit 22 may be specifically configured to bear the first control information in the idle chip in the access timeslot sent by the AICH and send the first control information to the UE.

For the first control information, reference may be made to the first control information in the foregoing embodiment for understanding, and therefore no further details are provided herein.

It can be seen that, the idle chip in the access timeslot sent by the AICH may be used to bear the first control information corresponding to the F-PCICH configuration information, and it is not necessary to extend the AICH. This can be conveniently implemented.

As shown in FIG. 3, the resource allocation apparatus provided in the embodiment of the present invention may further include: a second transmission unit 31 and a second transmission unit 31.

The second transmission unit 31 may be configured to send mapping relationship between the F-PCICH configuration information and the F-PCICH resource index number to the UE.

The second transmission unit 31 may be further configured to send mapping relationship between common E-DCH configuration information and a common E-DCH resource index number to the UE.

Optionally, the base station and the UE may pre-negotiate mapping relationship between the first control information and the F-PCICH resource index number, and configure the mapping relationship between the first control information and the F-PCICH resource index number.

Alternatively, the base station may send the mapping relationship between the first control information and the F-PCICH resource index number to the UE. In this case, the second transmission unit 31 may be further configured to send mapping relationship between the first control information and the F-PCICH configuration information to the UE.

Optionally, the base station and the UE may pre-negotiate mapping relationship between second control information and the common E-DCH resource index number, and configure the mapping relationship between the second control information and the common E-DCH resource index number.

Alternatively, the base station may send the mapping relationship between the second control information and the common E-DCH resource index number to the UE. The second transmission unit 31 may be configured to send mapping relationship between the second control information and the common E-DCH configuration information to the UE.

It can be seen that, mapping relationship exists between the first control information, the F-PCICH resource index number, and the F-PCICH resource.

Mapping relationship exists between the second control information, the common E-DCH resource index number, and a common E-DCH resource.

For the second control information, reference may be made to the second control information in the foregoing embodiment for understanding, and therefore no further details are provided herein.

Optionally, the allocation unit 21 may be specifically configured to receive an access preamble sent from the UE; allocate the common E-DCH resource to the UE; receive a UL CLTD capability indication or a UL CLTD request indication that is sent from the UE; and allocate the F-PCICH resource to the UE if it is determined, according to the UL CLTD capability indication, that the UE has a UL CLTD capability, or it is determined, according to the UL CLTD request indication, that the UE requests use of a UL CLTD.

The first transmission unit 22 may be further specifically configured to send, through the second control information, the common E-DCH configuration information included in the common E-DCH resource to the UE.

Optionally, the allocation unit 21 may be specifically configured to receive an access preamble sent from the UE; determine a signature of the access preamble; and if the signature belongs to a first signature set, allocate the common E-DCH resource to the UE and allocate the F-PCICH resource to the UE, where a signature in the first signature set is used to be selected by a UE that has a UL CLTD capability or requests use of a UL CLTD so as to send the access preamble.

Optionally, the allocation unit 21 may be specifically configured to receive an access preamble sent from the UE; determine a scrambling code of the access preamble; and if the scrambling code belongs to a first scrambling code set, allocate the common E-DCH resource to the UE and allocate the F-PCICH resource to the UE, where a scrambling code in the first scrambling code set is used to be selected by a UE that has a UL CLTD capability or requests use of a UL CLTD so as to send the access preamble.

Optionally, the allocation unit 21 may be specifically configured to receive an access preamble sent from the UE; determine a signature and a scrambling code of the access preamble; and if the signature belongs to a first signature set and the scrambling code belongs to a first scrambling code set, allocate the common E-DCH resource to the UE and allocate the F-PCICH resource to the UE, where a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

Optionally, the allocation unit 21 may be specifically configured to receive an access preamble sent from the UE; allocate the common E-DCH resource to the UE and allocate the F-PCICH resource to the UE; receive a UL CLTD capability indication or a UL CLTD request indication that is sent from the UE; and if it is determined, according to the UL CLTD capability indication, that the UE does not have a UL CLTD capability, or it is determined, according to the UL CLTD request indication, that the UE does not request use of a UL CLTD, withdraw the F-PCICH resource allocated to the UE.

Persons skilled in the art may understand that, the first transmission unit 22 and the second transmission unit 31 may be implemented by one sender. For example, the resource allocation apparatus includes one sender, where the sender is configured to perform actions performed by the foregoing first transmission unit 22 and second transmission unit 31. Optionally, the first transmission unit 22 and the second transmission unit 31 may be implemented by different senders. For example, the resource allocation apparatus includes: a first sender and a second sender, configured to perform actions performed by the foregoing first transmission unit 22 and second transmission unit 31, respectively.

The resource allocation apparatus and its components provided in the embodiment of the present invention may be configured to implement actions performed by the base station in the method for allocating resource provided in the foregoing embodiment. For details, reference may be made to a corresponding part of the method for allocating resource in the embodiment corresponding to FIG. 1 for understanding, and therefore no further details are provided herein.

Within the technical scope disclosed in the embodiment of the present invention, persons skilled in the art may apply the resource allocation apparatus in the embodiment of the present invention to UL CLTD and MIMO transmit diversity technologies on CDMA and WCDMA.

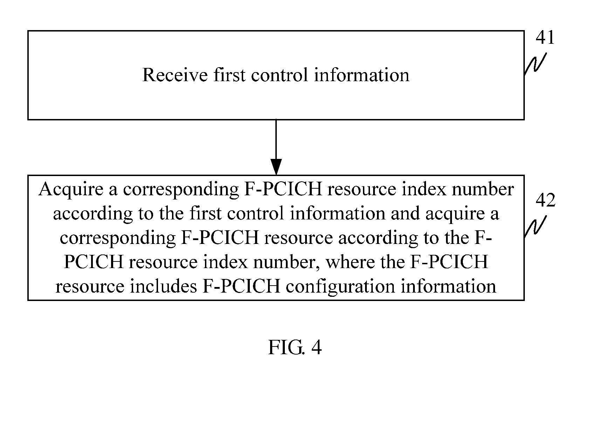

As shown in FIG. 4, an embodiment of the present invention provides a method for acquiring resource, which is described as follows:
41. Receive first control information.
42. Acquire a corresponding F-PCICH resource index number according to the first control information, and acquire a corresponding F-PCICH resource according to the F-PCICH resource index number, where the F-PCICH resource includes F-PCICH configuration information.

The method for acquiring resource in the embodiment of the present invention may be executed by a UE, and the UE receives first control information sent by a base station. The base station is, for example, a Node B.

In the method for acquiring resource in the embodiment of the present invention, the F-PCICH resource may include one or more of the following: a frame offset (frame offset), a slot format (slot format), and a channelization code number (channelization code number). However, the F-PCICH resource is not limited to the frame offset, the slot format, and the channelization code number. The F-PCICH configuration information may include value information of one or more of the following parameters: the frame offset, the slot format, and the channelization code number of the F-PCICH resource.

It can be seen from the technical solution provided in the foregoing embodiment of the present invention that, an F-PCICH resource is allocated to a UE, where the F-PCICH resource includes F-PCICH configuration information; and the F-PCICH configuration information is sent to the UE through first control information. This enables the UE to acquire the F-PCICH resource, so that an application of a UL CLTD technology can be implemented.

Optionally, the F-PCICH resource includes F-PCICH configuration information of the UE in a CELL-FACH state or an IDLE state.

Optionally, the first control information occupies an idle chip in an access timeslot sent by an AICH, and the first control information includes a first signature and a first acquisition indicator corresponding to the first signature, where the first signature includes multiple sequences formed of real numbers, and the first acquisition indicator includes +1, -1, or 0.

Specifically, for the first control information, reference may be made to the first control information in the foregoing embodiment for understanding, and therefore no further details are provided herein.

Optionally, corresponding to manner 1 of allocating the F-PCICH resource to the UE by the base station in the foregoing embodiment, the method for acquiring resource in the embodiment of the present invention may further include:
sending an access preamble; and
sending an uplink closed-loop transmit diversity (UL CLTD) capability indication or a UL CLTD request indication.

To allocate a common E-DCH resource to the UE, the base station may bear second control information corresponding to common E-DCH configuration information included in the common E-DCH resource on an AICH and send the second control information to the UE.

The common E-DCH resource may include one or more of the following: a symbol offset (symbol offset), an F-DPCH (fractional dedicated physical channel, Fractional Dedicated Physical Channel) channel code number, an E-HICH (E-DCH hybrid ARQ indicator channel, E-DCH Hybrid ARQ Indicator Channel), an E-RGCH (E-DCH relative grant channel, E-DCH Relative Grant Channel), a scrambling code type, and a scrambling code number, but is not limited thereto. The common E-DCH configuration information may include value information of one or more of the following parameters: the symbol offset, the F-DPCH channel code number, the E-HICH, the E-RGCH, the scrambling code type, and the scrambling code number.

If determining, according to the UL CLTD capability indication, that the UE has a UL CLTD capability, or determining, according to the UL CLTD request indication, that the UE requests use of a UL CLTD, the base station allocates the F-PCICH resource to the UE.

It can be seen that, the common E-DCH resource is allocated to the UE first, and the base station dynamically allocates an F-PCICH resource from the F-PCICH resource pool to the UE only if confirming that the UE obtaining the common E-DCH resource has the UL CLTD capability or requests the use of the UL CLTD. This not only implements that the UE in the CELL-FACH state or the IDLE state applies a UL CLTD technology, but also avoids a waste of F-PCICH resources.

Optionally, corresponding to manner 2 of allocating the F-PCICH resource to the UE by the base station in the foregoing embodiment, the method for acquiring resource in the embodiment of the present invention may further include:
sending an access preamble, where a signature of the access preamble belongs to a first signature set, and a signature in the first signature set is used to be selected by a UE that has a UL CLTD capability or requests use of a UL CLTD so as to send the access preamble.

The first signature set may include one or more signatures.

The base station determines the signature of the access preamble, and if the signature belongs to the first signature set, allocates the common enhanced dedicated channel (E-DCH) resource to the UE and allocates the F-PCICH resource to the UE.

It can be seen that, the base station detects a reserved signature set for the UE that has the UL CLTD capability or requests the use of the UL CLTD to select and send the access preamble, and dynamically allocates an F-PCICH resource from the F-PCICH resource pool to the UE.

Optionally, corresponding to manner 3 of allocating the F-PCICH resource to the UE by the base station in the foregoing embodiment, the method for acquiring resource in the embodiment of the present invention may further include:
sending an access preamble, where a scrambling code of the access preamble belongs to a first scrambling code set, and a scrambling code in the first scrambling code set is used to be selected by a UE that has a UL CLTD capability or requests use of a UL CLTD so as to send the access preamble.

The first scrambling code set may include one or more scrambling codes.

The base station determines the scrambling code of the access preamble, and if the scrambling code belongs to the first scrambling code set, allocates the common enhanced dedicated channel (E-DCH) resource to the UE and allocates the F-PCICH resource to the UE.

It can be seen that, the base station detects a reserved scrambling code for the UE that has the UL CLTD capability or requests the use of the UL CLTD to select and send the access preamble, and dynamically allocates an F-PCICH resource from the F-PCICH resource pool to the UE.

Optionally, a signature and a scrambling code of an access preamble may further be combined as follows:
The base station determines the signature and the scrambling code of the access preamble, and if the signature belongs to a first signature set and the scrambling code belongs to a first scrambling code set, allocates the common E-DCH resource to the UE and allocates the F-PCICH resource to the UE, where a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

Optionally, corresponding to manner 4 of allocating the F-PCICH resource to the UE by the base station in the foregoing embodiment, the method for acquiring resource in the embodiment of the present invention may further include:
sending an access preamble; and
sending a UL CLTD capability indication or a UL CLTD request indication.

The base station allocates the common E-DCH resource to the UE and allocates the F-PCICH resource to the UE. If determining, according to the UL CLTD capability indication, that the UE does not have the UL CLTD capability, or determining, according to the UL CLTD request indication, that the UE does not request the use of the UL CLTD, the base station withdraws the F-PCICH resource allocated to the UE.

It can be seen that, the base station pre-allocates the common E-DCH resource and the F-PCICH resource to the UE first; and after the UE starts uplink transmission, in a collision detection phase, if determining that the UE does not have the UL CLTD capability or does not request the use of the UL CLTD, the base station withdraws the F-PCICH resource pre-allocated to the UE, and if determining that the UE has the UL CLTD capability or requests the use of the UL CLTD, the base station retains the F-PCICH resource pre-allocated to the UE.

Optionally, before receiving first control information in step 41, the method for acquiring resource in the embodiment of the present invention may further include:
receiving mapping relationship between the F-PCICH configuration information and the F-PCICH resource index number; and
receiving mapping relationship between the common E-DCH configuration information, a common E-DCH resource index number, and second control information.

It can be seen that, mapping relationship exists between the first control information, the F-PCICH resource index number, and the F-PCICH configuration information.

Mapping relationship exists between the second control information, the common E-DCH resource index number, and the common E-DCH configuration information.

Within the technical scope disclosed in the embodiment of the present invention, persons skilled in the art may apply the method for acquiring resource in the embodiment of the present invention to UL CLTD and MIMO transmit diversity technologies on CDMA and WCDMA.

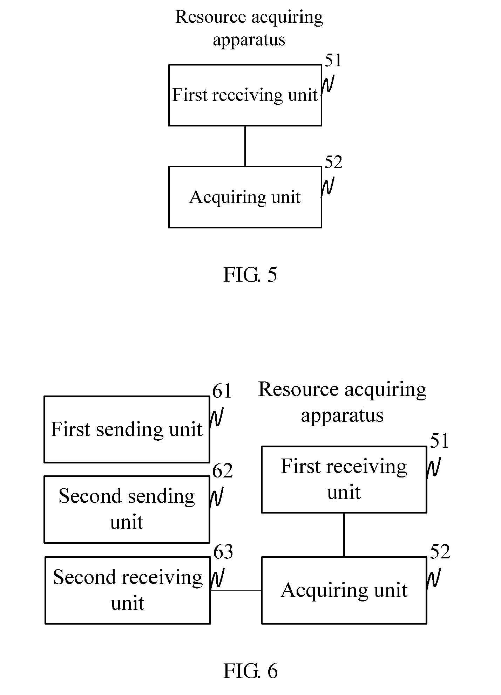

As shown in FIG. 5, an embodiment of the present invention provides a resource acquiring apparatus corresponding to the method for acquiring resource in the foregoing embodiment, where the apparatus includes a first receiving unit 51 and an acquiring unit 52.

The first receiving unit 51 is configured to receive first control information.

The acquiring unit 52 is configured to acquire a corresponding F-PCICH resource index number according to the first control information, and acquire a corresponding F-PCICH resource according to the F-PCICH resource index number, where the F-PCICH resource includes F-PCICH configuration information.

The resource acquiring apparatus in the embodiment of the present invention may be a user equipment and may also be independently arranged or may be arranged together with a UE.

It can be seen from the technical solution provided in the foregoing embodiment of the present invention that, an F-PCICH resource is allocated to a UE, where the F-PCICH resource includes F-PCICH configuration information; and the F-PCICH configuration information is sent to the UE through first control information. This enables the UE to acquire the F-PCICH resource, so that an application of a UL CLTD technology can be implemented.

Optionally, the F-PCICH resource includes F-PCICH configuration information of the UE in a CELL-FACH state or an IDLE state.

Optionally, the first control information occupies an idle chip in an access timeslot sent by an AICH. Specifically, for the first control information, reference may be made to control information in the foregoing embodiment for understanding, and therefore no further details are provided herein.

Optionally, the first receiving unit 51 may be further configured to receive second control information.

For the second control information, reference may be made to the second control information in the foregoing embodiment for understanding, and therefore no further details are provided herein.

Optionally, as shown in FIG. 6, the resource acquiring apparatus in the embodiment of the present invention may further include a first sending unit 61 and a second sending unit 62.

The first sending unit 61 is configured to send an access preamble, where a signature of the access preamble belongs to a first signature set, and a signature in the first signature set is used to be selected by a UE that has a UL CLTD capability or requests use of a UL CLTD so as to send the access preamble.

The first signature set may include one or more signatures.

The second sending unit 62 is configured to send a UL CLTD capability indication or a UL CLTD request indication, where the UL CLTD capability indication is used to indicate whether a UE has the UL CLTD capability, and the UL CLTD request indication is used to indicate whether the UE requests the use of the UL CLTD.

Optionally, the first sending unit 61 may be further configured to send an access preamble, where a scrambling code of the access preamble belongs to a first scrambling code set, and a scrambling code in the first scrambling code set is used to be selected by a UE that has a UL CLTD capability or requests use of a UL CLTD so as to send the access preamble.

Alternatively, the first sending unit 61 may be further configured to send an access preamble, where a signature of the access preamble belongs to a first signature set, a scrambling code of the access preamble belongs to a first scrambling code set, a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

The first scrambling code set may include one or more scrambling codes.

Optionally, the resource acquiring apparatus in the embodiment of the present invention may further include:
a second receiving unit 63, configured to receive mapping relationship between the F-PCICH configuration information and the F-PCICH resource index number.

The second receiving unit 63 may be further configured to receive mapping relationship between common E-DCH configuration information and a common E-DCH resource index number.

It can be seen that, mapping relationship exists between the first control information, the F-PCICH resource index number, and the F-PCICH configuration information.

Mapping relationship exists between the second control information, the common E-DCH resource index number, and the common E-DCH configuration information.

Persons skilled in the art may understand that the first sending unit 61 and the second sending unit 62 may be implemented by one sender. For example, the resource allocation apparatus includes one sender, where the sender is configured to perform actions performed by the foregoing first sending unit 61 and sending transmission unit 62. Optionally, the first sending unit 61 and the second sending unit 62 may be implemented by different senders. For example, the resource allocation apparatus includes: a first sender and a second sender, configured to perform actions performed by the foregoing first sending unit 61 and second sending unit 62, respectively.

A first receiving unit 52 and the second receiving unit 63 may be implemented by one receiver. For example, the resource acquiring apparatus includes one receiver, where the receiver is configured to perform actions performed by the foregoing first receiving unit 52 and second receiving unit 63. Optionally, the first receiving unit 52 and the second receiving unit 63 may be implemented by different receivers. For example, the resource acquiring apparatus includes: a first receiver and a second receiver, configured to perform actions performed by the foregoing first receiving unit 52 and second receiving unit 63, respectively.

The resource acquiring apparatus and its components provided in the embodiment of the present invention may be configured to implement actions performed by the UE in the method for acquiring resource provided in the foregoing embodiment. For details, reference may be made to a corresponding part of the method for acquiring resource in the foregoing embodiment for understanding, and therefore no further details are provided herein.

Within the technical scope disclosed in the embodiment of the present invention, persons skilled in the art may apply the resource acquiring apparatus in the embodiment of the present invention to UL CLTD and MIMO transmit diversity technologies on CDMA and WCDMA.

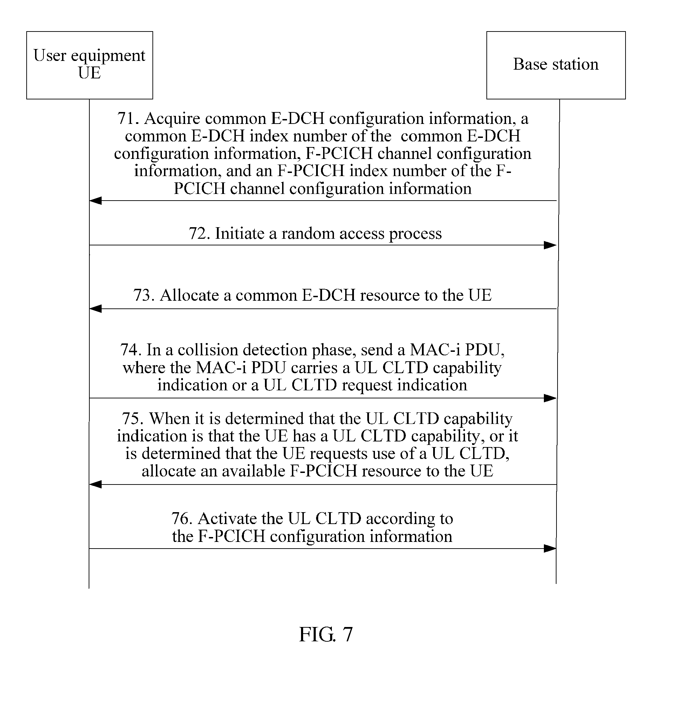

As shown in FIG. 7, a process of initiating random access and sending data by a UE in a CELL-FACH state in the 3GPP is used as an example to describe a method for allocating resource in an embodiment of the present invention, where the method includes:
71. A UE acquires mapping relationship between common E-DCH configuration information and a common E-DCH resource index number, and mapping relationship between F-PCICH channel configuration information and an F-PCICH resource index number.

The UE reads and stores a common E-DCH resource, a common E-DCH resource index number of the common E-DCH resource, an F-PCICH channel resource, and an F-PCICH resource index number of the F-PCICH resource that are in a system broadcast message SIB (System Information Block, system information block) 5 and are configured in a cell.

72. The UE initiates a random access process.

The UE selects a corresponding signature to send a preamble so as to initiate random access.

73. A Node B allocates the common E-DCH resource to the UE.

The Node B receives the preamble sent from the UE, the Node B allocates the common E-DCH resource to the UE, and the Node B sends second control information to the UE through an AICH.

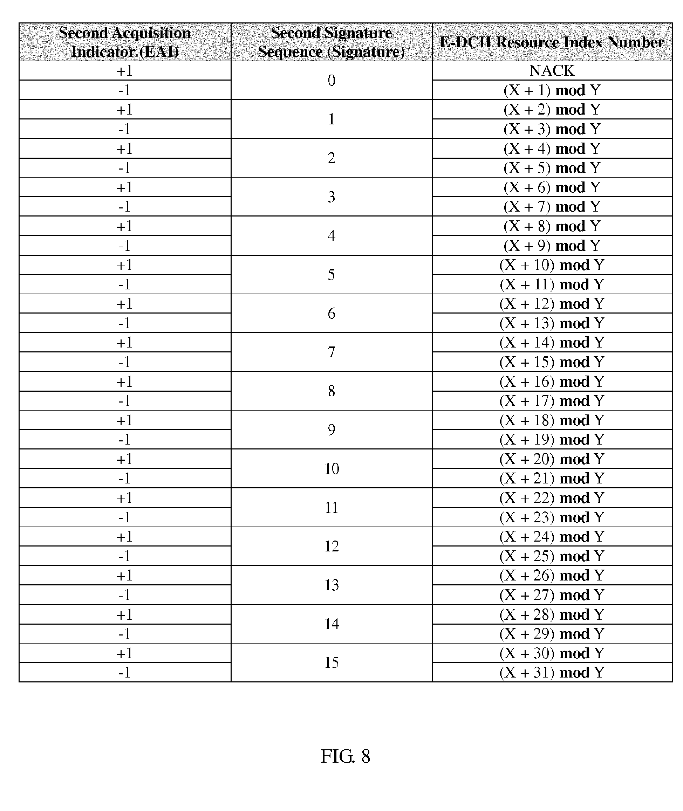

Exemplarily, FIG. 8 shows a mapping table between the second control information and the common E-DCH resource index number. The second control information includes a second signature and a second acquisition indicator (EAI), where the EAI includes +1, -1, and 0, and the second signature includes multiple sequences formed of real numbers. A value of a signature is a second signature sequence corresponding to the second signature. For example, if the value of the signature is 0, a correspondingly indicated second signature is 1111111111111111.

Here, a second signature table of mapping relationship between the signature and the second signature is omitted. For details of the second signature table, reference may be made to a first signature table in the following for understanding.

Optionally, the signature may not be used, and the second signature is directly used in FIG. 8, which is not limited in the embodiment of the present invention.

In FIG. 8, X represents a default E-DCH resource index number that is corresponding to a signature of an access preamble of an AI acknowledgment NACK (Negative Acknowledgement, negative acknowledgment) sent by the AICH, Y represents the total number of E-DCH resources in the cell, and Mod indicates a modulo operation. The common E-DCH resource index number may include the NACK and values of 1-31.

Therefore, the common E-DCH resource index number can be determined by using the EAI and the signature.

74. In a collision detection phase, the UE sends a MAC-i PDU, where the MAC-i PDU carries a UL CLTD capability indication or a UL CLTD request indication.

In the collision detection phase, the UE sends the MAC-i PDU by using the common E-DCH resource corresponding to the common E-DCH resource index number, where the MAC-i PDU carries an E-RNTI. The E-RNTI used for collision detection may be allocated by the Node B in messages, such as an RRC (Radio Resource Control, radio resource control) connection establishment message or a cell update acknowledgment message, and then transferred by an RNC (Radio Network Controller, radio network controller) to the UE.

The MAC-i PDU further carries the UL CLTD capability indication or the UL CLTD request indication. Specifically, a reserved bit in the MAC-i PDU may be used to bear the UL CLTD capability indication or the UL CLTD request indication.

75. The Node B allocates an available F-PCICH resource from an F-PCICH resource pool to the UE.

The Node B reads the reserved bit in the MAC-i PDU; if determining that the UL CLTD capability indication is that the UE has a UL CLTD capability, or determining that the UE requests use of a UL CLTD, the Node B allocates the available F-PCICH resource from the F-PCICH resource pool to the UE, that is, allocating the F-PCICH resource to the UE; and the Node B sends first control information corresponding to the F-PCICH resource by using an AICH idle timeslot to the UE.

If determining that the UL CLTD capability indication is that the UE does not have the UL CLTD capability, or determining that the UE does not request the use of the UL CLTD, the Node B does not allocate the F-PCICH resource to the UE, that is, the UE is rejected for the use of the UL CLTD.

Specifically, after the collision detection is complete, the Node B uses 1024 idle chips (chip) in an AICH access timeslot to bear the first control information.

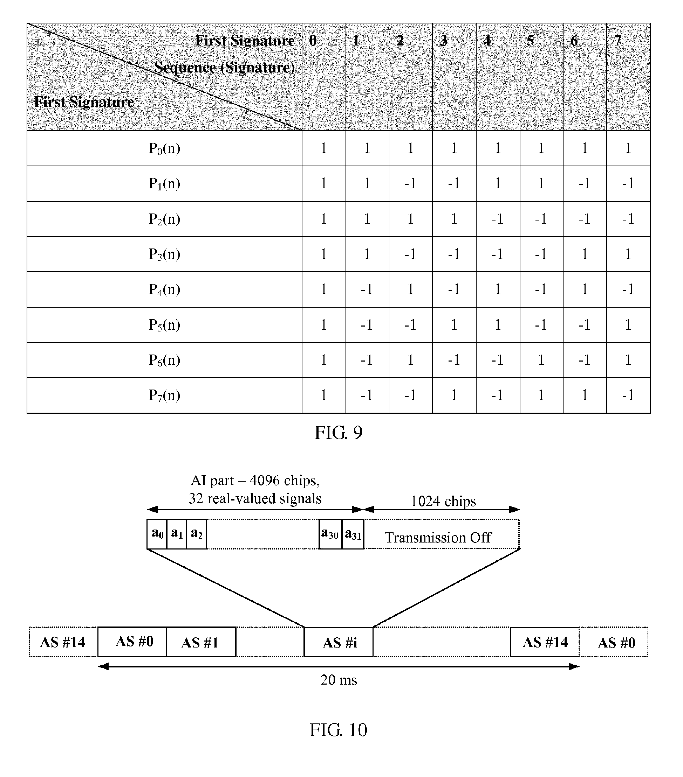

FIG. 9 shows a first signature table. The first signature table includes mapping relationship between a signature and a first signature. The first signature is an 8-bit sequence formed of real number values, and the 8-bit first signature may be eight signature sequences that are mutually orthogonal and generated by using a Hadamard (Hadamard) matrix. As shown in FIG. 9, each row in P0(n)-P7(n) is a first signature.

As shown in FIG. 10, currently, in a sending timeslot on the AICH channel, AS#0-AS#14 is 20 ms (millisecond). 4096 chips (a0-a31) at the beginning of AS#0-AS#14 are used to send 32-bit control information (where 16 bits bear the second control information), and 1024 chips are still idle and unoccupied. In the method for allocating resource in the embodiment of the present invention, the 1024 chips are used to bear 8-bit first control information to indicate the F-PCICH resource index number.

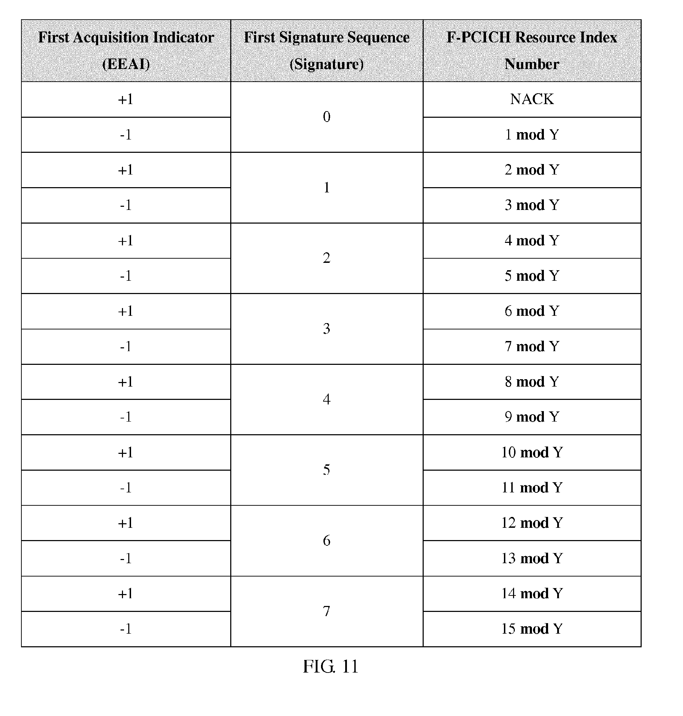

FIG. 11 shows a mapping table between the first control information and the F-PCICH resource.

A first acquisition indicator (EEAI) includes +1, -1, and 0.

A value of a signature is corresponding to a first signature. For example, if the value of the signature is 0, as shown in FIG. 9, a correspondingly indicated first signature is 111111.

Y represents the total number of the F-PCICH resources in the cell, and Mod indicates a modulo operation. The F-PCICH resource index number may include the NACK and values of 1-15. The NACK represents that no F-PCICH resource is allocated to the UE, that is, the UE is rejected for the use of the UL CLTD.

Therefore, the F-PCICH resource index number may be determined by using the EEAI and the signature.

In addition, the first control information corresponding to the F-PCICH configuration information and the second control information corresponding to the common E-DCH configuration information may be sent together to the UE in the access timeslot sent by the AICH; because the second control information is corresponding to the common E-DCH configuration information obtained by the UE, it is convenient for the UE to determine that an AICH received after the collision detection is sent to the UE itself.

76. The UE activates the UL CLTD according to the F-PCICH resource.

A certain time later after receiving the first control information corresponding to the F-PCICH configuration information, the UE activates the UL CLTD according to the F-PCICH configuration information.

In the method for allocating resource in the embodiment of the present invention, an F-PCICH channel resource is not allocated to each set of common E-DCH resources, but one F-PCICH channel resource pool is allocated for all common E-DCH resources, so as to improve utilization of the F-PCICH channel resource, where several configurations of F-PCICH channel resources may be included. If confirming that a UE obtaining the common E-DCH resource is capable of using a UL CLTD, a Node B dynamically allocates an F-PCICH channel resource to the UE.

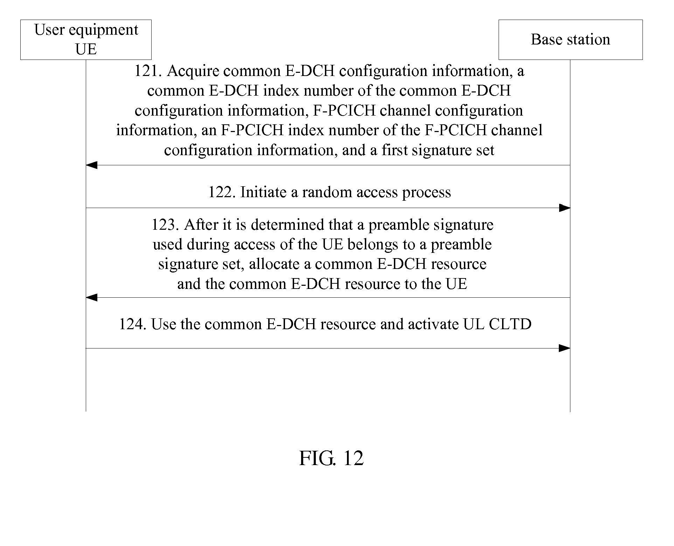

Optionally, as shown in FIG. 12, a process of initiating random access and sending data by a UE in a CELL-FACH state in the 3GPP is used as an example to describe a method for allocating resource in an embodiment of the present invention, where the method includes:
121. A UE acquires mapping relationship between a common E-DCH resource and a common E-DCH resource index number of the common E-DCH resource, mapping relationship between an F-PCICH channel resource and an F-PCICH resource index number of the F-PCICH channel resource, and a first signature set.

The UE reads and stores the common E-DCH resource, a common E-DCH resource index number of the common E-DCH resource, the F-PCICH channel resource, an F-PCICH resource index number of the F-PCICH channel resource, and the first signature set that are in a system broadcast message SIB5 and are configured in a cell, where a signature in the first signature set is used to be selected by a UE that has a UL CLTD capability or requests use of a UL CLTD so as to send an access preamble.

122. The UE initiates a random access process.

The UE selects a corresponding signature from the first signature set to send a preamble so as to initiate Preamble access.

123. A Node B allocates the F-PCICH resource and the common E-DCH resource to the UE.

After the Node B receives the preamble sent from the UE and determines that a signature used during the access of the UE belongs to the first signature set, the Node B allocates an available F-PCICH resource from an F-PCICH resource pool to the UE, that is, allocating the F-PCICH resource to the UE, and the Node B sends, by using an idle AICH timeslot, first control information corresponding to F-PCICH configuration information to the UE. The Node B allocates the common E-DCH resource to the UE, and the Node B sends second control information to the UE through an AICH.

Optionally, the first control information corresponding to the F-PCICH configuration information and the second control information corresponding to common E-DCH configuration information may be sent together to the UE in an access timeslot sent by the AICH.

Specifically, FIG. 9-FIG. 11 may be used for understanding that the first control information is corresponding to the F-PCICH resource index number, and the F-PCICH resource index number is corresponding to the F-PCICH configuration information.

124. Use the common E-DCH resource and activate the UL CLTD.

After receiving the first control information and the second control information, the UE starts, a certain time later, to use the common E-DCH resource and activate the UL CLTD.

In the method for allocating resource in the embodiment of the present invention, a Node B reserves a signature set for a UE that has a UL CLTD capability or requests use of a UL CLTD to select and send an access preamble, and after the Node B determines that a signature used during access of the UE belongs to a first signature set, the Node B sends, by using an access timeslot sent by an AICH, first control information corresponding to F-PCICH configuration information and second control information corresponding to common E-DCH configuration information.

Alternatively, in the method for allocating resource in the embodiment of the present invention, a Node B may also reserve a scrambling code set for a UE that has a UL CLTD capability or requests use of a UL CLTD to select and send an access preamble, and after the Node B determines that a scrambling code used during access of the UE belongs to a first scrambling code set, the Node B sends, by using an access timeslot sent by an AICH, first control information corresponding to F-PCICH configuration information and second control information corresponding to common E-DCH configuration information.

Alternatively, in the method for allocating resource in the embodiment of the present invention, a Node B reserves a signature set and a scrambling code set for a UE that has a UL CLTD capability or requests use of a UL CLTD to select and send an access preamble, and after the Node B determines that a signature belongs to a first signature set and a scrambling code belongs to a first scrambling code set, where the signature and the scrambling code are used during access of the UE, the Node B sends, by using an access timeslot sent by an AICH, first control information corresponding to F-PCICH configuration information and second control information corresponding to common E-DCH configuration information.

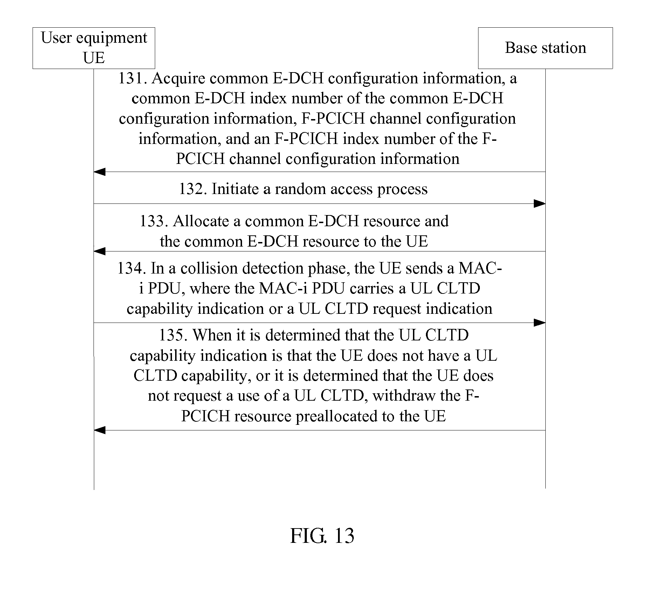

Optionally, as shown in FIG. 13, a process of initiating random access and sending data by a UE in a CELL-FACH state in the 3GPP is used as an example to describe a method for allocating resource in an embodiment of the present invention, where the method includes:
131. A UE acquires mapping relationship between a common E-DCH resource and a common E-DCH resource index number of the common E-DCH resource and mapping relationship between an F-PCICH channel resource and an F-PCICH resource index number of the F-PCICH channel resource.

The UE reads and stores the common E-DCH resource, the common E-DCH resource index number of the common E-DCH resource, the F-PCICH channel resource, and the F-PCICH resource index number of the F-PCICH channel resource that are in a system broadcast message SIB5 and are configured in a cell.

132. The UE initiates a random access process.

The UE selects a corresponding signature to send a preamble so as to initiate Preamble access.

133. A Node B allocates an available F-PCICH resource and the common E-DCH resource to the UE.

The Node B receives the preamble sent from the UE, the Node B allocates the available F-PCICH resource from an F-PCICH resource pool to the UE, that is, allocates the F-PCICH resource to the UE, and the Node B sends, by using an idle chip in an access timeslot sent by an AICH, first control information corresponding to the F-PCICH resource to the UE. The Node B allocates the common E-DCH resource to the UE, and the Node B sends second control information to the UE through the AICH.

Optionally, the first control information corresponding to F-PCICH configuration information and the second control information corresponding to common E-DCH configuration information may be sent together to the UE in an access timeslot sent by the AICH.

Specifically, FIG. 9-FIG. 11 may be used for understanding that the first control information is corresponding to the F-PCICH resource index number, and the F-PCICH resource index number is corresponding to the F-PCICH configuration information.

134. In a collision detection phase, the UE sends a MAC-i PDU, where the MAC-i PDU carries a UL CLTD capability indication or a UL CLTD request indication.

In the collision detection phase, the UE sends the MAC-i PDU by using the common E-DCH resource corresponding to the common E-DCH resource index number, where the MAC-i PDU carries an E-RNTI.

The MAC-i PDU further carries the UL CLTD capability indication or the UL CLTD request indication.

135. If the Node B determines that the UL CLTD capability indication is that the UE does not have a UL CLTD capability, or determines that the UE does not request use of a UL CLTD, the Node B withdraws the F-PCICH resource pre-allocated to the UE.

The Node B reads a reserved bit in the MAC-i PDU; if determining that the UL CLTD capability indication is that the UE has the UL CLTD capability, or determining that the UE requests the use of the UL CLTD, the Node B retains the F-PCICH resource pre-allocated to the UE; and if determining that the UL CLTD capability indication is that the UE does not have the UL CLTD capability, or determining that the UE does not request the use of the UL CLTD, the Node B withdraws the F-PCICH resource pre-allocated to the UE.

It may be clearly understood by persons skilled in the art that, for the purpose of convenient and brief description, for a detailed working process of the foregoing system, apparatus, and unit, reference may be made to a corresponding process in the foregoing method embodiments, and therefore no further details are provided herein.

In the several embodiments provided in the present application, it should be understood that, the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

If the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as these modifications or replacements do not cause the essence of corresponding technical solutions to depart from the spirit and scope of the technical solutions of the embodiments of the present invention.

## Claims

1. A method for allocating resource, comprising:
allocating fractional precoding control indication channel (F-PCICH) resource to a user equipment (UE), wherein the F-PCICH resource comprises F-PCICH configuration information; and
sending the F-PCICH configuration information to the UE through first control information, wherein the first control information is corresponding to an F-PCICH resource index number, and the F-PCICH resource index number is corresponding to the F-PCICH configuration information.

2. The method for allocating resource according to claim 1, wherein the first control information occupies an idle chip in an access timeslot sent by an acquisition indicator channel (AICH), and the first control information is borne in the idle chip in the access timeslot sent by the AICH and is sent to the UE.

3. The method for allocating resource according to claim 1 or 2, wherein the first control information comprises a first signature and a first acquisition indicator corresponding to the first signature, the first signature comprises multiple sequences formed of real numbers, and the first acquisition indicator comprises one of +1, -1 and 0.

4. The method for allocating resource according to claim 3, wherein the first signature is generated by using a Hadamard Hadamard matrix.

5. The method for allocating resource according to claim 1, wherein the allocating the F-PCICH resource to the UE comprises:
receiving an access preamble sent from the UE;
allocating a common enhanced dedicated channel (E-DCH) resource to the UE;
receiving one of an uplink closed-loop transmit diversity (UL CLTD) capability indication and a UL CLTD request indication that is sent from the UE; and
allocating the F-PCICH resource to the UE if it is determined, according to the UL CLTD capability indication, that the UE has a UL CLTD capability, or it is determined, according to the UL CLTD request indication, that the UE requests use of a UL CLTD.

6. The method for allocating resource according to claim 1, wherein the allocating the F-PCICH resource to the UE comprises:
receiving an access preamble sent from the UE; and
determining a signature of the access preamble; and
allocating a common enhanced dedicated channel (E-DCH) resource and the F-PCICH resource to the UE if the signature belongs to a first signature set, wherein a signature in the first signature set is used to be selected by a UE that has a UL CLTD capability or requests use of a UL CLTD so as to send the access preamble.

7. The method for allocating resource according to claim 1, wherein the allocating the F-PCICH resource to the UE comprises:
receiving an access preamble sent from the UE; and
determining a scrambling code of the access preamble; and
allocating a common enhanced dedicated channel (E-DCH) resource and the F-PCICH resource to the UE if the scrambling code belongs to a first scrambling code set, wherein a scrambling code in the first scrambling code set is used to be selected by a UE that has a UL CLTD capability or requests use of a UL CLTD so as to send the access preamble.

8. The method for allocating resource according to claim 1, wherein the allocating the F-PCICH resource to the UE comprises:
receiving an access preamble sent from the UE; and
determining a signature and a scrambling code of the access preamble; and
allocating a common enhanced dedicated channel (E-DCH) resource and the F-PCICH resource to the UE if the signature belongs to a first signature set and the scrambling code belongs to a first scrambling code set, wherein a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

9. The method for allocating resource according to claim 1, wherein the allocating the F-PCICH resource to the UE comprises:
receiving an access preamble sent from the UE;
allocating a common E-DCH resource and the F-PCICH resource to the UE;
receiving one of a UL CLTD capability indication and a UL CLTD request indication that is sent from the UE; and
withdrawing the F-PCICH resource allocated to the UE if it is determined, according to the UL CLTD capability indication, that the UE does not have a UL CLTD capability, or it is determined, according to the UL CLTD request indication, that the UE does not request use of a UL CLTD.

10. The method for allocating resource according to claim 1, wherein the F-PCICH resource comprises F-PCICH configuration information of the UE in a cell-forward access channel (CELL-FACH) state or an idle IDLE state.

11. A resource allocation apparatus, comprising an allocation unit and a first transmission unit, wherein:
the allocation unit is configured to allocate fractional precoding control indication channel (F-PCICH) resource to a user equipment (UE), wherein the F-PCICH resource comprises F-PCICH configuration information; and
the first transmission unit is configured to send the F-PCICH configuration information to the UE through first control information, wherein the first control information is corresponding to an F-PCICH resource index number, and the F-PCICH resource index number is corresponding to the F-PCICH configuration information.

12. The resource allocation apparatus according to claim 11, wherein the first control information occupies an idle chip in an access timeslot sent by an acquisition indicator channel (AICH), and the first transmission unit is specifically configured to bear the first control information in the idle chip in the access timeslot sent by the AICH and send the first control information to the UE.

13. The resource allocation apparatus according to claim 11 or 12, wherein the first control information comprises a first signature and a first acquisition indicator corresponding to the first signature, the first signature comprises multiple sequences formed of real numbers, and the first acquisition indicator comprises one of +1, -1 and 0.

14. The resource allocation apparatus according to claim 11, wherein the allocation unit is specifically configured to receive an access preamble sent from the UE; allocate a common E-DCH resource to the UE; receive one of an uplink closed-loop transmit diversity (UL CLTD) capability indication and a UL CLTD request indication that is sent from the UE; and allocate the F-PCICH resource to the UE if it is determined, according to the UL CLTD capability indication, that the UE has a UL CLTD capability, or it is determined, according to the UL CLTD request indication, that the UE requests use of a UL CLTD.

15. The resource allocation apparatus according to claim 11, wherein the allocation unit is specifically configured to receive an access preamble sent from the UE; determine a signature of the access preamble; and allocate a common enhanced dedicated channel (E-DCH) resource and the F-PCICH resource to the UE if the signature belongs to a first signature set, wherein a signature in the first signature set is used to be selected by a UE that has a UL CLTD capability or requests use of a UL CLTD so as to send the access preamble.

16. The resource allocation apparatus according to claim 11, wherein the allocation unit is specifically configured to receive an access preamble sent from the UE; determine a scrambling code of the access preamble; and allocate a common enhanced dedicated channel (E-DCH) resource and the F-PCICH resource to the UE if the scrambling code belongs to a first scrambling code set, wherein a scrambling code in the first scrambling code set is used to be selected by a UE that has a UL CLTD capability or requests use of a UL CLTD so as to send the access preamble.

17. The resource allocation apparatus according to claim 11, wherein the allocation unit is specifically configured to receive an access preamble sent from the UE; determine a signature and a scrambling code of the access preamble; and allocate a common enhanced dedicated channel (E-DCH) resource and the F-PCICH resource to the UE if the signature belongs to a first signature set and the scrambling code belongs to a first scrambling code set, wherein a signature in the first signature set is used to be selected by a UE that has a UL CLTD capability or requests use of a UL CLTD so as to send the access preamble, and a scrambling code in the first scrambling code set is used to be selected by the UE that has the UL CLTD capability or requests the use of the UL CLTD so as to send the access preamble.

18. The resource allocation apparatus according to claim 11, wherein the allocation unit is specifically configured to receive an access preamble sent from the UE; allocate a common E-DCH resource and the F-PCICH resource to the UE; receive a UL CLTD capability indication or a UL CLTD request indication that is sent from the UE; and withdraw the F-PCICH resource allocated to the UE if it is determined, according to the UL CLTD capability indication, that the UE does not have a UL CLTD capability, or it is determined, according to the UL CLTD request indication, that the UE does not request use of a UL CLTD.

19. A method for acquiring resource, comprising:
receiving first control information; and
acquiring a corresponding fractional precoding control indication channel (F-PCICH) resource index number according to the first control information, and acquiring a corresponding F-PCICH resource according to the F-PCICH resource index number, wherein the F-PCICH resource comprises F-PCICH configuration information.

20. The method for acquiring resource according to claim 19, wherein the first control information occupies an idle chip in an access timeslot sent by an AICH, the first control information comprises a first signature and a first acquisition indicator corresponding to the first signature, the first signature comprises multiple sequences formed of real numbers, and the first acquisition indicator comprises one of +1, -1 and 0.

21. The method for acquiring resource according to claim 19, before the receiving the first control information, further comprising one of:
sending an access preamble, wherein a signature of the access preamble belongs to a first signature set, and a signature in the first signature set is used to be selected by a user equipment (UE) that has an uplink closed-loop transmit diversity (UL CLTD) capability or requests use of an uplink closed-loop transmit diversity (UL CLTD) so as to send the access preamble;
sending an access preamble, wherein a scrambling code of the access preamble belongs to a first scrambling code set, and a scrambling code in the first scrambling code set is used to be selected by a user equipment (UE) that has an uplink closed-loop transmit diversity (UL CLTD) capability or requests use of an uplink closed-loop transmit diversity (UL CLTD) so as to send the access preamble; and
sending an access preamble, wherein a signature of the access preamble belongs to a first signature set, a scrambling code of the access preamble belongs to a first scrambling code set, a signature in the first signature set is used to be selected by a user equipment (UE) that has an uplink closed-loop transmit diversity (UL CLTD) capability or requests use of an uplink closed-loop transmit diversity (UL CLTD) so as to send the access preamble, and a scrambling code in the first scrambling code set is used to be selected by the UE that has the UL CLTD capability or requests the use of the UL CLTD so as to send the access preamble.

22. The method for acquiring resource according to claim 19, before the receiving the first control information, further comprising:
sending one of an uplink closed-loop transmit diversity (UL CLTD) capability indication and an uplink closed-loop transmit diversity (UL CLTD) request indication, wherein the UL CLTD capability indication is used to indicate whether a user equipment (UE) has a UL CLTD capability, and the UL CLTD request indication is used to indicate whether the UE requests use of a UL CLTD.

23. The method for acquiring resource according to claim 22, wherein the UL CLTD capability indication or the UL CLTD request indication is borne through a medium access control (MAC) header.

24. The method for acquiring resource according to claim 19, wherein the F-PCICH resource comprises F-PCICH configuration information of a user equipment (UE) in a cell-forward access channel (CELL-FACH) state or an IDLE state.

25. A resource acquiring apparatus, comprising a first receiving unit and an acquiring unit, wherein:
the first receiving unit is configured to receive first control information; and
the acquiring unit is configured to acquire a corresponding fractional precoding control indication channel (F-PCICH) resource index number according to the first control information, and acquire a corresponding F-PCICH resource according to the F-PCICH resource index number, wherein the F-PCICH resource comprises F-PCICH configuration information.

26. The resource acquiring apparatus according to claim 25, wherein the first control information occupies an idle chip in an access timeslot sent by an acquisition indicator channel (AICH), the first control information comprises a first signature and a first acquisition indicator corresponding to the first signature, the first signature comprises multiple sequences formed of real numbers, and the first acquisition indicator comprises one of +1, -1 and 0.

27. The resource acquiring apparatus according to claim 25, further comprising:
a first sending unit, configured to send an access preamble, wherein a signature of the access preamble belongs to a first signature set, and a signature in the first signature set is used to be selected by a UE that has an uplink closed-loop transmit diversity (UL CLTD) capability or requests use of an uplink closed-loop transmit diversity (UL CLTD) so as to send the access preamble; configured to send an access preamble, wherein a scrambling code of the access preamble belongs to a first scrambling code set, and a scrambling code in the first scrambling code set is used to be selected by a UE that has an uplink closed-loop transmit diversity (UL CLTD) capability or requests use of an uplink closed-loop transmit diversity (UL CLTD) so as to send the access preamble; or, configured to send an access preamble, wherein a signature of the access preamble belongs to a first signature set, a scrambling code of the access preamble belongs to a first scrambling code set, a signature in the first signature set is used to be selected by a UE that has an uplink closed-loop transmit diversity (UL CLTD) capability or requests use of an uplink closed-loop transmit diversity (UL CLTD) so as to send the access preamble, and a scrambling code in the first scrambling code set is used to be selected by the UE that has the UL CLTD capability or requests the use of the UL CLTD so as to send the access preamble.

28. The resource acquiring apparatus according to claim 25, further comprising:
a second sending unit, configured to send an uplink closed-loop transmit diversity (UL CLTD) capability indication or an uplink closed-loop transmit diversity (UL CLTD) request indication, wherein the UL CLTD capability indication is used to indicate whether a user equipment (UE) has a UL CLTD capability, and the UL CLTD request indication is used to indicate whether the UE requests use of an uplink closed-loop transmit diversity (UL CLTD).
